# EUROPÄISCHE PATENTSCHRIFT

(11) **EP 1 469 280 B1**
(45) Veröffentlichungstag und Bekanntmachung des Hinweises auf die Patenterteilung: **25.07.2007**
(21) Anmeldenummer: 04006995.7
(22) Anmeldetag: 24.03.2004
(51) Int. Cl.: G01C 3/04

(54) **Abbildende optische Vorrichtung, insbesondere Fernglas oder Fernrohr**
Optical imaging device, in particular binoculars or telescope
Dispositif d'imagerie optique, notamment jumelles ou téléscope

(30) Priorität: 16.04.2003 DE 10317483
(43) Veröffentlichungstag der Anmeldung: 20.10.2004
(73) Patentinhaber: Steiner-Optik GmbH, 95448 Bayreuth (DE)
(72) Erfinder: Steiner, Carl, 95463 Bindlach (DE)
(74) Vertreter: Schneck, Herbert

(56) Entgegenhaltungen:
- DE-A1- 19 823 076
- US-A- 5 235 458
- US-A- 5 587 846
- US-B1- 6 307 366

## Beschreibung

Die Erfindung betrifft eine abbildende optische Vorrichtung, insbesondere ein Fernglas oder ein Fernrohr.

Derartige optische Vorrichtungen sind in vielerlei Ausgestaltung durch offenkundige Vorbenutzung bekannt. Viele dieser bekannten optischen Vorrichtungen weisen zur Einstellung der Gegenstandsweite innerhalb des optischen Systems mittels einer Einstell-Einrichtung verstellbare, optische Komponenten auf. Auf diese Weise lässt sich ein mit der optischen Vorrichtung anvisiertes Objekt scharf stellen.

Die DE 198 23 076 A1 beschreibt eine abbildende optische Vorrichtung am Beispiel eines Vermessungsinstruments.

Weitere abbildende optische Vorrichtungen sind bekannt aus der US 5 587 846 A und der US 5 235 458 A.

Aus der US 6,307,366 B1 ist ein Messgerät zur Erfassung der Lage eines Objekts bekannt.

Es besteht der Bedarf, die bekannten optischen Vorrichtungen komfortabler auszugestalten.

Diese Aufgabe wird erfindungsgemäß gelöst durch eine abbildende optische Vorrichtung mit den Merkmalen des Anspruchs 1.

Erfindungsgemäß wurde erkannt, dass über die erfassbare relative Lage der zur Einstellung der Gegenstandsweite des optischen Systems der optischen Vorrichtung verstellbaren optischen Komponenten über eine aufgrund des ebenfalls bekannten optischen Designs des optischen Systems bekannte Umrechnung zu jeder relativen Lage der optischen Komponenten die zugeordnete Gegenstandsweite berechen- und darstellbar ist. Dies erhöht den Komfort der optischen Vorrichtung beträchtlich, da der Benutzer nach Scharfstellung eines mit der optischen Vorrichtung anvisierten Objekts automatisch auch seine Entfernung zu diesem Objekt ablesen kann. Ein Potentiometer-Abgriff zur Erfassung der relativen Lage der optischen Komponenten zueinander ist kostengünstig fertigbar und liefert je nach Ausführung präzise Daten zur aktuellen Lage des Einstellkörpers. Der Aufbau eines Potentiometer-Abgriffs mit einem starr mit der mindestens einen einstellbaren optischen Komponente verbundenen Schleifer und einem gehäusefesten Schleifkontakt ist einfach.

Eine Ausgabe-Einrichtung nach Anspruch 2 hat einen geringen Energiebedarf. Eine derartige Ausgabe-Einrichtung lässt sich bei Bedarf auch beleuchten.

Ein Bedienknopf nach Anspruch 3 verringert zusätzlich den Energiebedarf der optischen Vorrichtung. Dabei kann auch wahlweise nur die Erfassungs- oder nur die Ausgabe-Einrichtung aktiviert werden. Eine isolierte Aktivierung der Erfassungs-Einrichtung ermöglicht eine Momentanerfassung der Entfernung eines scharfgestellten Objekts zur späteren Ablesung. Eine isolierte Aktivierung der Ausgabe-Einrichtung ermöglicht eine Momentanablesung der ggf. schon früher eingestellten Entfernung.

Ein Flachbandkabel nach Anspruch 4 führt zu einer kompakten Ausführung, wobei insbesondere auch schon vorhandene Gehäusekonstruktionen optischer Vorrichtungen eingesetzt werden können.

Ein Ausführungsbeispiel der Erfindung wird nachfolgend anhand der Zeichnung näher erläutert. In dieser zeigen:
- Fig. 1: eine perspektivische Ansicht eines Fernglases;
- Fig. 2: eine Aufsicht auf das Fernglas von Fig. 1;
- Fig. 3: einen Schnitt längs Linie III-III in Fig. 2 in vergrößertem Maßstab;
- Fig. 4: eine Ausschnittsvergrößerung aus Fig. 3;
- Fig. 5: eine interne Details zeigende Darstellung eines Brückenteils des Fernglases mit Blickrichtung von unten ;
- Fig. 6: einen Schnitt längs Linie VI-VI in Fig. 5;
- Fig. 7: eine Ausschnittsvergrößerung aus Fig. 6;

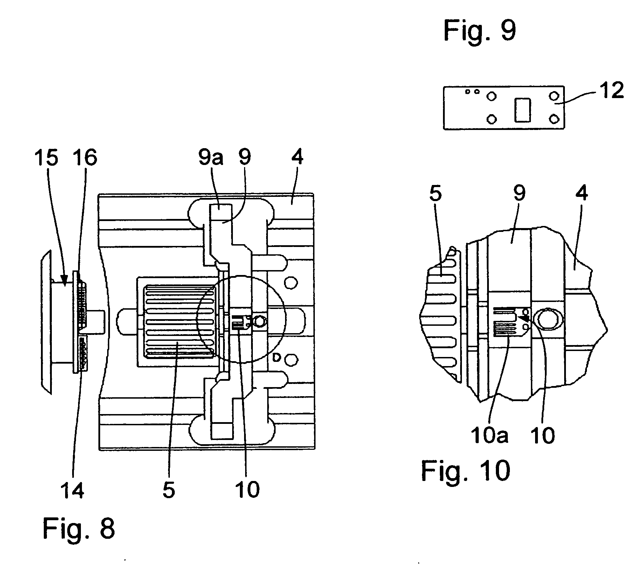

- Fig. 8: eine zu Fig. 5 ähnliche Darstellung, bei der zur Sichtbarmachung weiterer interner Details noch weitere Komponenten des Fernglases weggenommen sind;
- Fig. 9: einen Schleifkontakt einer Erfassungs-Einrichtung zur Erfassung der relativen Lage optischer Komponenten des Fernglases; und
- Fig. 10: eine Ausschnittsvergrößerung aus Fig. 8.

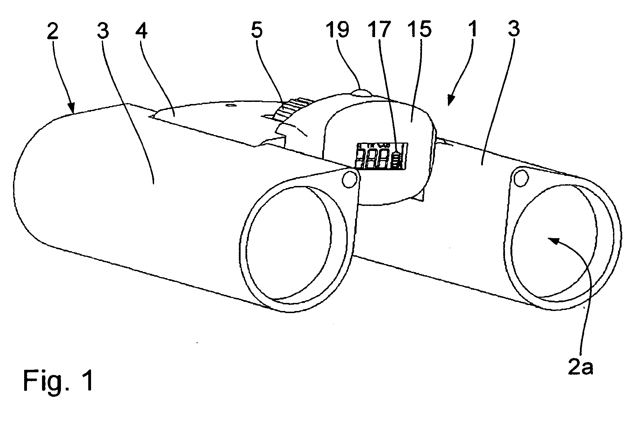

Fig. 1 zeigt ein insgesamt mit dem Bezugszeichen 1 bezeichnetes Fernglas, welches nachfolgend als Beispiel für eine abbildende optische Vorrichtung dienen soll. Das Fernglas 1 weist ein mehrteiliges Gehäuse 2 auf. Dieses umfasst zwei im Wesentlichen rohrförmige Fassungsteile 3 für die symmetrisch zueinander beabstandet angeordneten optischen Komponenten eines optischen Systems 2a des binokularen Fernglases 1 sowie ein Brückenteil 4, welches quer zu den beiden Fassungsteilen 3 verläuft und diese miteinander verbindet. Aus dem Brückenteil 4 nach oben heraus ragt der Bedienabschnitt eines Fokussierrades 5.

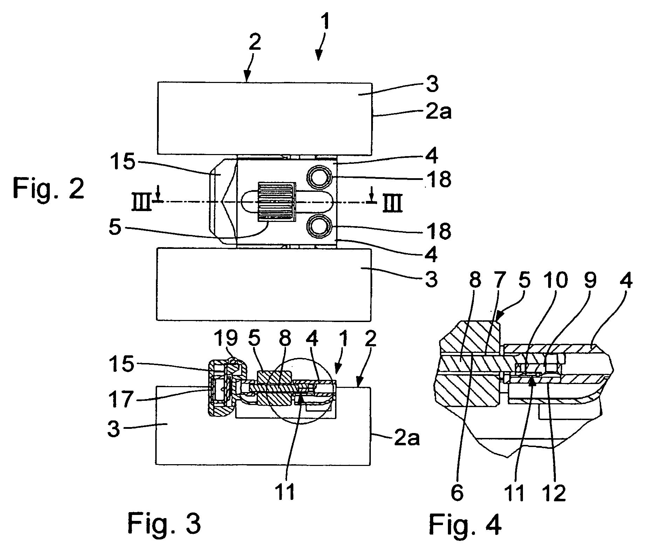

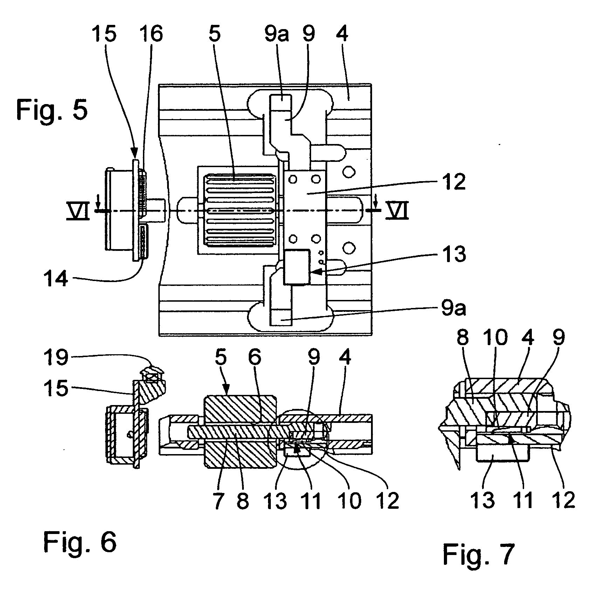

Wie insbesondere den Fig. 3 und 6 zu entnehmen ist, hat das Fokussierrad 5 ein Innengewinde 6, in welches ein hierzu komplementäres Außengewinde 7 einer Fokussier-Stellschraube 8 eingreift. An der Fokussier-Stellschraube 8 ist ein quer zu deren Längsachse verlaufender Stellbalken 9 mittig befestigt. Die freien Enden 9a des Stellbalkens 9 tragen jeweils eine Linse der beiden symmetrischen optischen Anordnungen des optischen Systems 2a des binokularen Fernglases 1.

Starr mittig mit dem Stellbalken 9 verbunden ist ein Schleifer 10 eines Potentiometer-Abgriffs 11 zur Erfassung der relativen Lage des Stellbalkens 9 zum starren Abschnitt des Brückenteils 4 des Gehäuses 2. Hierzu steht der Schleifer 10 über fünf parallele Kontaktfinger 10a mit einem gehäusefesten Schleifkontakt 12 elektrisch in Verbindung. Letzterer steht über einen Steckkontakt sowie über ein in der Zeichnung nur abschnittsweise dargestelltes Flachbandkabel 13 und über einen weiteren Steckkontakt 14 einer Elektronik-Einheit 15 mit dieser in Signalverbindung. Teil der Elektronik-Einheit 15 ist ein Prozessor 16. Ein weiterer Teil der Elektronik-Einheit 15 ist ein LCD-Display 17.

Der Potentiometer-Abgriff 11 sowie die Elektronik-Einheit 15 werden über eine in der Zeichnung nicht dargestellte Versorgungsleitung mit Hilfe zweier im Brückenteil 4 untergebrachter Batterien 18 mit Energie versorgt. Über einen Bedienknopf 19, der oben aus dem Gehäuse der Elektronik-Einheit 15 herausragt, lässt sich letztere bedienen.

Eine Entfernungsmessung mit dem Fernglas 1 geht folgendermaßen vor sich: Der Benutzer des Fernglases 1 richtet dieses auf das Objekt, dessen Entfernung zum Benutzer bestimmt werden soll, und stellt mit Hilfe des Fokussierrades 5 die optische Anordnung des Fernglases 1 scharf auf das Objekt ein. Hierzu dreht er am Fokussierrad 5, sodass über die mechanische Kopplung des Fokussierrades 5 über die Fokussier-Stellschraube 8, den Stellbalken 9 und die an den freien Enden 9a angebrachten, optischen Komponenten der Abstand von diesen zu benachbarten optischen Komponenten des optischen Systems 2a zur Einstellung der Gegenstandsweite des optischen Systems 2a des binokularen Fernglases 1 verstellt wird. Das Fokussierrad 5 dient daher als Einstell-Einrichtung zur Einstellung der Gegenstandsweite. Die Position des Stellbalkens 9 relativ zum starren Abschnitt des Brückenteils 4 des Gehäuses 2 und damit die Position der verstellbaren optischen Komponenten innerhalb des optischen Systems 2a wird über den Potentiometer-Abgriff 11 erfasst. Letzterer dient daher als Erfassungs-Einrichtung zur Erfassung der relativen Lage der optischen Komponenten des optischen Systems 2a des Fernglases 1 zueinander.

Ein dieser relativen Lage zugeordneter Spannungswert am Potentiometer-Abgriff 11 wird über das Flachbandkabel 13 an den Prozessor 16 der Elektronik-Einheit 15 übertragen. Dieser rechnet den Spannungswert des Potentiometer-Abgriffs 11, also die von dort erhaltenen Lagedaten, mit Hilfe einer vorher in einem nicht flüchtigen Speicher der Elektronik-Einheit 15 abgelegten Kalibriertabelle in eine der aktuellen Stellung der optischen Komponenten zugeordnete Gegenstandsweite des Fernglases 1 um. Die umgerechnete Gegenstandsweite wird dann vom Prozessor 16 an das LCD-Display 17 übertragen. Dort wird die aktuelle Gegenstandsweite und damit die Entfernung des Benutzers zum scharf gestellten Objekt in Metern mit einer Stelle nach dem Komma dargestellt. Das LCD-Display 17 dient daher als Ausgabe-Einrichtung zur ablesbaren Darstellung der vom Prozessor umgerechneten Gegenstandsweite.

Über den Bedienknopf 19 kann der Benutzer nach Scharfstellung des Fernglases 1 auf das Objekt, dessen Entfernung zu bestimmen ist, die Anzeige des LCD-Displays 17 auslösen. Zudem kann der Benutzer mit dem Bedienknopf 19 die Genauigkeit der Anzeige sowie die dargestellte Einheit (Meter/Fuß) wählen. Das LCD-Display 17 weist ferner eine Batterieanzeige zur Rückmeldung des aktuellen Ladezustandes der Batterien 18 auf.

Vor der eigentlichen Entfernungsmessung kann das Fernglas noch auf einen gegebenenfalls vorhandenen Benutzer-Augenfehler eingestellt werden. Hierzu wird das optische System 2a derart eingestellt, daß beide Seiten des binokularen Fernglases 1 auf unendlich fokussiert sind. Es kann hierbei zum Beispiel ein sehr weit entfernter und auflösbare Details aufweisender Gegenstand anvisiert werden. Anschließend folgt die oben beschriebene Entfernungsmessung.

Ein Umschalten des Fernglases 1 zwischen einem Messmodus zur Entfernungsmessung und einem Kalibriermodus zur Korrektur eines Benutzer-Augenfehlers beziehungsweise zur Kalibrierung und Erzeugung der Kalibriertabelle kann ebenfalls durch den Bedienknopf 19 erfolgen.

## Patentansprüche

1. Abbildende optische Vorrichtung, insbesondere Fernglas (1) oder Fernrohr,
- mit einem Gehäuse (2),
- mit einem optischen System (2a) mit mindestens zwei optischen Komponenten, deren Abstand relativ zueinander zur Einstellung der Gegenstandsweite des optischen Systems (2a) verstellbar ist,
- mit einer mit mindestens einer der beiden optischen Komponenten mechanisch gekoppelten Einstell-Einrichtung (5) zur Verstellung des Abstandes zwischen den beiden optischen Komponenten,
- mit einer Erfassungs-Einrichtung (11) zur Erfassung der relativen Lage der optischen Komponenten zueinander,
- mit einem mit der Erfassungs-Einrichtung (11) in Signalverbindung stehenden Prozessor (16) zur Umrechnung der von der Erfassungs-Einrichtung (11) erhaltenen Lagedaten in die Gegenstandsweite des optischen Systems;
- mit einer mit dem Prozessor (16) in Signalverbindung stehenden Ausgabe-Einrichtung (17) zur ablesbaren Darstellung der umgerechneten Gegenstandsweite und
- mit einer Energieversorgungs-Einrichtung, insbesondere mindestens einer Batterie (18), für die Erfassungs-Einrichtung (11), den Prozessor (16) und die Ausgabe-Einrichtung (17),
- wobei die Einstell-Einrichtung (5) einen beweglichen Einstellkörper, insbesondere ein Justierrad aufweist, **dadurch gekennzeichnet dass**
- die Erfassungs-Einrichtung (11) einen Potentiometer-Abgriff umfasst, der die aktuelle Lage des Einstellkörpers erfasst, wobei der Potentiometer-Abgriff der Erfassungs-Einrichtung (11) einen Schleifer (10), der starr mit der mindestens einen einstellbaren optischen Komponente verbunden ist, und einen gehäusefesten Schleifkontakt (12) aufweist,
- die optische Vorrichtung zwischen einem Messmodus zur Entfernungsmessung und einem Kalibriermodus zur Korrektur eines Benutzer-Augenfehlers umschaltbar ist.

2. Optische Vorrichtung nach Anspruch 1, **dadurch gekennzeichnet, dass** die Ausgabe-Einrichtung (17) als LCD-Display ausgeführt ist.

3. Optische Vorrichtung nach Anspruch 1 oder 2, **gekennzeichnet durch** einen Bedienknopf (19) zur zeitweisen Aktivierung der Erfassungs-Einrichtung (11) und/oder der Ausgabe-Einrichtung (17).

4. Optische Vorrichtung nach einem der Ansprüche 1 bis 3, **dadurch gekennzeichnet, dass** die Energieversorgung der Erfassungs-Einrichtung (11) über ein Flachbandkabel (13) erfolgt.

## Claims

1. An imaging optical device, in particular binoculars (1) or a telescope, comprising
- a casing (2);
- an optical system (2a) having at least two optical components, the distance of which relative to each other being adjustable for focus setting of the optical system (2a);
- an adjusting device (5), which is coupled mechanically with at least one of the two optical components, for regulation of the distance between the two optical components;
- a detection device (11) for detecting the position of the optical components relative to one another;
- a processor (16) which is in signalling connection with the detection device (11) for conversion of position data obtained from the detection device (11) into a focal length of the optical system;
- an output device (17) which is in signalling connection with the processor (16) for readable display of the converted focal length; and
- an energy-supply device, in particular at least one battery (18), for the detection device (11), the processor (16) and the output device (17);
- an adjusting device (5) comprising a movable adjusting body, in particular an adjusting wheel, **characterized in that**
- the detection device (11) comprises a potentiometer pickoff which detects the current position of the adjusting body, in which the potentiometer pickoff of the detection device (11) comprises a wiper (10), which is rigidly connected to the at least one adjustable optical component and a wiper contact (12) which is fixed to the casing (2).
- the optical device is switchable from a mode of distance measurement to a calibration mode for correction of a user's eye defect.

2. An optical device according claim 1, **characterized in that** the output device (17) is a liquid crystal display.

3. An optical device according to one of claims 1 to 2, **characterized by** an operating button (19) for temporary activation of the detection device (11) and/or of the output device (17).

4. An optical device according to one of claims 1 to 3, **characterized in that** supply of the detection device (11) with energy takes place via a rib-bon cable (13).

## Revendications

1. Dispositif d'imagerie optique, notamment jumelles (1) ou téléscope
- avec un boîtier (2),
- avec un système optique (2a) avec au moins deux composants optiques, dont la distance entre eux est modifiable pour régler la distance à l'objet du système optique (2a),
- avec un dispositif de réglage (5) couplé mécaniquement à au moins l'un des deux composants optiques pour régler la distance entre les deux composants optiques,
- avec un dispositif de détection (11) pour détecter la position relative des composants optiques entre eux,
- avec un processeur (16) en liaison de signal avec le dispositif de détection (11) pour convertir les données de position obtenues par le dispositif de détection (11) en la distance à l'objet du système optique ;
- avec un dispositif de sortie (17) en liaison de signal avec le processeur (16) pour une représentation lisible de la distance à l'objet convertie et
- avec un dispositif d'alimentation en énergie, particulièrement au moins une batterie (18) pour le dispositif de détection (11), le processeur (16) et le dispositif de sortie (17),
moyennant quoi le dispositif de réglage (5) présente un corps de réglage mobile, notamment une molette de réglage,
**caractérisé en ce que**
- le dispositif de détection (11) comprend une prise pour potentiomètre qui détecte la position actuelle du corps de réglage, moyennant quoi la prise pour potentiomètre du dispositif de détection (11) présente un curseur (10) qui est relié fixement à l'au moins un composant optique réglable et un contact de curseur (12) fixe dans le boîtier,
- le dispositif optique peut passer d'un mode de mesure pour mesurer l'éloignement à un mode de calibrage pour corriger les erreurs de l'oeil d'un utilisateur.

2. Dispositif optique selon la revendication 1, **caractérisé en ce que** le dispositif de sortie (17) est un écran LCD.

3. Dispositif optique selon la revendication 1 ou 2, **caractérisé par** un bouton de commande (19) pour activer par moments le dispositif de détection (11) et/ou le dispositif de sortie (17).

4. Dispositif optique selon l'une des revendications 1 à 3, **caractérisé en ce que** l'alimentation en énergie du dispositif de détection (11) s'effectue par un câble plat (13).
